Europäisches Patentamt

European Patent Office

Office européen des brevets

(11) Publication number: **0 095 919**

**B1**

(12) **EUROPEAN PATENT SPECIFICATION**

(45) Date of publication of patent specification: **06.08.86**

(51) Int. Cl.⁴: **C 08 L 25/12, C 08 L 33/08**

(21) Application number: **83303089.3**

(22) Date of filing: **27.05.83**

(54) Process for the preparation of mixes or blends of acrylic rubbers with styrene/acrylonitrile copolymers.

(30) Priority: **01.06.82 IT 2161982**

(43) Date of publication of application:
**07.12.83 Bulletin 83/49**

(45) Publication of the grant of the patent:
**06.08.86 Bulletin 86/32**

(84) Designated Contracting States:
**DE FR GB NL**

(56) References cited:
**FR-A-1 151 709**
**FR-A-2 025 084**
**FR-A-2 119 150**

(73) Proprietor: **Montedison S.p.A.**
**31, Foro Buonaparte**
**I-20121 Milan (IT)**

(72) Inventor: **Fiore, Leonardo**
**46, Via de Lemene**
**Milano (IT)**
Inventor: **Binaghi, Marco**
**43, Via Sismondi**
**Milano (IT)**
Inventor: **Bonicelli, Ugo**
**6, Via Cavezzali**
**Milano (IT)**

(74) Representative: **Whalley, Kevin et al**
**Marks & Clerk 57/60 Lincoln's Inn Fields**
**London WC2A 3LS (GB)**

Courier Press, Leamington Spa, England.

# 0 095 919

## Description

The present invention relates to a process for the preparation of mixes or blends of acrylic rubbers with styrene/acrylonitrile copolymers, having improved impact-resistance characteristics.

It is known that an improvement of the impact resistance properties of a relatively fragile (brittle) thermoplastic material such as a styrene/acrylonitrile copolymer (SAN) may be obtained by the addition to the SAN of a gummy polymer with a sufficiently high degree of chemical/physical compatibility with the SAN.

Usually the compatibility of the rubber with the SAN is achieved by grafting onto the rubber segments of styrene/acrylonitrile copolymer. The rubbers used for such a grafting may be of different types. Those normally used are polybutadiene, ethyl- and/or butyl polyacrylate, and the ethylene/propylene/diene terpolymers. The grafting onto the rubber may be carried out in various different ways. Thus, for instance, the rubber may be treated in an emulsion or suspension or in solution, by the addition of a radical catalyst and of a mix or blend of styrene and acrylonitrile monomers. In any case, the modification of the rubber requires special circumstances in which to start the grafting. The grafted rubber must then undergo separation from the residual monomers, purification and drying before it may be admixed with the SAN in the desired ratio.

The rigid SAN matrix is in general synthesised separately. In some circumstances the matrix may be prepared in the same reactor in which is carried out the grafting of the rubber. In this case the process is, however, made even more complicated by the higher number of variables to be controlled.

It has now been found by the present Applicants that it is possible to make particular types of acrylic rubber compatible with SAN, that is to obtain an improvement of the impact-resistant characteristics of the SAN by the addition of the acrylic rubber, carrying out the mixing together of the two products in the presence of particular compounds of the Lewis acid type.

Thus, the present invention provides a process for preparing a mix or blend of an acrylic rubber which comprises a copolymer of 95—99.5 mol per cent of ethylacrylate and/or butylacrylate with 5—0.5 mol per cent of acrylic and/or methacrylic acid, with a copolymer of 75—65 mol per cent of styrene with 25—35 mol per cent of acrylonitrile, characterized by comprising mixing together the said acrylic rubber with the said styrene/acrylonitrile copolymer in an amount of acrylic rubber of from 5% to 50% by weight based on the weight of the acrylic rubber and styrene/acrylonitrile copolymer, at a temperature from the glass transition temperature of the styrene/acrylonitrile copolymer to 220°C, in the presence of from 0.05% to 2% by weight, based on the weight of the mixture of polymers, of a compound selected from zinc chloride, cadmium chloride, ferric chloride, aluminium chloride and boron trifluoride, preferably in the form of $BF_3 \cdot (C_2H_5)_2O$, and in the presence of an epoxy cross-linking agent used in an amount of from 0.5 to 5 mols based on 100 mols of acrylic rubber, or, in the case that it is chemically bound to the rubber, on 100 mols of the total of monomeric units consisting of ethyl and/or butyl acrylate and acrylic and/or methacrylic acid.

It is thus possible to eliminate the whole of the preparatory stage of the grafted rubber and to conduct the reaction on the conventional standard machines used for the mixing of the SAN with the rubber, and for the successive operation, with an evident economical advantage, derived from the lower investment required for the equipment and for the simplification of the operations of the process. The use of acrylic rubber in the blend also imparts to it advantageous weather-proof characteristics, due to unsaturation in the gummy stage. Such unsaturation, present in other rubbers, in fact represents a preferential point of attack for the thermo- and photo-oxidation reactions.

The lewis acid used is a halide of the type: $ZnCl_2$, $CdCl_2$, $FeCl_3$, $AlCl_3$ or $BF_3 \cdot (C_2H_5)_2O$; $BF_3(C_2H_5)_2O$ is the chemical form in which the boron trifluoride is generally used. Such halide is used in an amount from 0.05% to 2% by weight based on the total weight of the polymeric blend.

Zinc chloride is preferred, more preferably in an amount of from 0.1% to 1% based on the mix or blend.

The acrylic rubber must possess particular characteristics of cross-linking, such that it will be possible to achieve with a single catalyst and in a single operation the grafting and cross-linking reactions.

The acrylic rubbers used are either copolymers consisting of 95—99.5 mol per cent of an ethyl- or butyl-acrylate and 5-0.5 mol per cent of an acrylic and/or methacrylic acid, or terpolymers of 95—99.5 mol per cent of a mixture of ethyl- and butylacrylate and 5—0.5 mol per cent of acrylic and/or methacrylic acid. Such copolymers or terpolymers must be used in the presence of a cross-linking agent of the epoxy type, that may be used in a mixture or in the form of a product chemically bound to the chain of the macromolecule of the copolymer or terpolymer. Such an epoxidic agent must have at least two epoxy functions when used in admixture with acrylic rubber, while it may, but not necessarily, be monofunctional when present as a product chemically bound to the rubber.

The epoxy agent or compound is used in an amount from 0.5 to 5 mols based on 100 mols of acrylic rubber, or, in the case that it is chemically bound to the rubber, on 100 mols of the total of monomeric units consisting of ethyl and/or butyl acrylate and acrylic and/or methacrylic acid.

Examples of such epoxy-compounds that may be used in admixture with acrylic rubber are diglycidylether of bisphenol A, ethyleneglycol-diglycidylether, and in general all the diepoxy and polyepoxy compounds, and all the epoxy resins having such a molecular weight as to be compatible or miscible with acrylic rubber. As epoxidic cross-linking agents chemically bound to the macromolecule of acrylic rubber, there may be mentioned as an example the glycidylether acrylates.

2

The blend of acrylic rubber with the SAN is carried out at a temperature from the glass transition temperature of the SAN (about 140°C) to 220°C. In practice the operating temperature is from 160°C to 220°C.

The quantity of acrylic rubber to be admixed with the SAN in the process of the present invention varies within a range of from 5% to 50%, preferably from 10% to 30%, by weight based on the weight of the blend with the SAN, depending on the degree of reinforcement desired.

The SAN used is formed from 25—35 mol per cent of acrylonitrile and 75—65 mol per cent of styrene.

The blending or mixing may be carried out on conventional (standard) equipment for the processing of polymers, such as a Banbury mill, extruder, or cylinder mixer. The operational conditions vary with the type of machine used.

The increase in impact-resistance of the blend made according to the present invention, with respect and in comparison to the impact-resistance of a simple mechanical blend, is considerable and may even attain 400%.

The invention will be further described with reference to the following illustrative Examples.

In the evaluation of the impact-resistance characteristics of the materials obtained according to the procedures described in the examples that follow, there was used the ASTM D 256 Method B Test (Charpy test) on test pieces or specimens 1/8 inch thick and with a notch or indent, obtained by a mechanical process from small plates of the same thickness, obtained by compression moulding.

The elasticity coefficient or modulus under bending was determined through a "bounce-test" on specimens identical with those subjected to the Charpy test, but without a notch. The measurement was carried out on a pendulum instrumented for Charpy-tests, with an impact velocity of 10 cm/sec. The flexural modulus or coefficient was calculated from the time of contact of the testing hammer with the specimen, through the formula:

$$E = \frac{\pi^2}{t^\circ} \quad \frac{MI^3}{48\ I}$$

where

E = elasticity modulus
t° = time of contact
M = effective mass of hammer
I = moment of inertia
l = distance between the supports of the specimen.

The characteristics of the SAN used in the following examples are given in Table 1 below. (The trade names KOSTIL AF, KOSTIL AM and KOSTIL AP refer to styrene/acrylonitrile copolymers produced by MONTEDISON S.p.A.).

TABLE 1

| Name of product | Content of acrylonitrile (mol%) | Intrinsic viscosity in tetrahydrofuran at 30°C (ml/g) | Mean numerical molecular weight |
|---|---|---|---|
| KOSTIL AF | 28 | 84 | 70,000 |
| KOSTIL AM | 25 | 78 | 62,000 |
| KOSTIL AP | 27 | 65 | 53,000 |

The characteristics of the acrylic rubbers (Elaprim AR 152 and AR 153) used in the following examples are given below.

(The trade names Elaprim AR 153 and Elaprim AR 152 refer to acrylic rubbers produced by MONTEDISON S.p.A.).

ELAPRIM AR 153: blend formed of 100 parts by weight of copolymer of ethylacrylate (99% by weight) and acrylic acid (1% by weight), with 3 parts by weight of diglycidylether of bisphenol A. This mix or blend has a Mooney viscosity at 100°C of 48.

ELAPRIM AR 152: blend formed of 100 parts by weight of terpolymer of ethylacrylate (64% by weight)/butylacrylate (35% by weight) and acrylic acid (1% by weight), with 3 parts by weight of diglycidylether of bisphenol A. This blend has a Mooney viscosity at 100°C of 37.

3

Example 1

15 Grams of Elaprim AR 153 rubber and 35 g of SAN copolymer (Kostil AP) were mixed together in a Brabender mill running at 100 r.p.m. and having the mixer barrel pre-heated by oil circulation at 170°C.

After 2 minutes there were added 0.15 grams of anhydrous zinc chloride, and mixing was then continued for a further 10 minutes. At the end of the mixing, the temperature of the mix or blend was about 220°C. The polymeric mass was thereupon extracted from the mixing mill and compression moulded.

A portion of the blend was then finally comminuted and extracted in an extractor with boiling acetone, in order to separate the gummy part of the SAN that had not reacted. Elementary analysis of the part insoluble in acetone showed a content in nitrogen of 1.1%, corresponding to a percentage of acrylonitrile bound to the rubber of about 4.1%.

Example 2 (for comparative purposes):

The same procedure was followed as in Example 1, but omitting the addition of the zinc chloride. The end or final temperature of the blend was about 200°C.

Example 3 (for comparative purposes):

The same procedure was followed as in Example 1, but using instead of Elaprim AR 153 rubber, an ethyl acrylate/acrylic acid copolymer containing 1 mol per cent of acrylic acid (thus operating in the absence of cross-linking epoxy).

Example 4

The procedure according to Example 3 was repeated, but there was added to the blend 0.45 grams of diglycidylether of bisphenol A.

In Table 2 below are given the Charpy resilience coefficients and the elasticity modulus under bending of the products obtained in Examples 1 to 4.

TABLE 2

| Example | Charpy resilience $(kg.cm/cm^2)$ | Elasticity modulus under bending $(kg/cm^2)$ |
|---------|-----------------------------------|-----------------------------------------------|
| 1 | 14.66 | 19,500 |
| 2 | 6.6 | 18,900 |
| 3 | 6.8 | 19,600 |
| 4 | 17.5 | 19,700 |

Example 5

Into a Banbury mill of 1300 cc holding capacity, there were introduced 910 grams of Kostil AP and 390 g of Elaprim AR 153. After mixing for 5 minutes, to the mix were added 4 g of anhydrous zinc chloride. Thereupon, mixing was continued at 210°C for 10 minutes, after which the molten mass was discharged from the Banbury mill and allowed to cool down, after which it was ground in a mill. From the ground material there were obtained by compression moulding test pieces or specimens to be used for the measurement of the elasticity modulus and the Charpy resilience coefficient.

Example 6

The procedure according to Example 5 was repeated, but using 975 grams of Kostil AP and 325 grams of Elaprim AR 153.

Example 7

The procedure according to Example 5 was repeated, but using 1040 grams of Kostil AP and 260 grams of Elaprim AR 153.

Example 8

The procedure according to Example 5 was repeated, but using 910 grams of Kostil AP and 390 grams of Elaprim AR 152 rubber.

Example 9 (for comparative purposes)

The procedure according to Example 8 was repeated, but omitting the addition of zinc chloride.

4

**0 095 919**

Example 10 (for comparative purposes)

The procedure according to Example 5 was repeated, but instead of zinc chloride there were used 0.4 grams of anhydrous cadmium chloride (i.e., less than 0.05% by weight).

Example 11

The procedure according to Example 5 was repeated, but instead of zinc chloride there were used 0.4 g of anhydrous ferric chloride.

In Table 3 below are given the Charpy resilience and the elasticity modulus under bending of the products obtained in Examples 5 to 11.

TABLE 3

| Example | Charpy resilience (kg.cm/cm$^2$) | Elasticity modulus under bending (kg/cm$^2$) |
|---|---|---|
| 5 | 17.1 | 19,500 |
| 6 | 13.4 | 20,900 |
| 7 | 8 | 26,100 |
| 8 | 16.7 | 19,200 |
| 9 | 5.8 | 27,400 |
| 10 | 6.2 | 19,600 |
| 11 | 10.1 | 17,600 |

Example 12

15 Grams of Elaprim AR 153 rubber and 35 grams of Kostil AP were mixed together in a Brabender mill running at 60 r.p.m. and with the barrel pre-heated to 170°C.

After 1 minute there were added 0.15 grams of anhydrous zinc chloride and the mixing was continued for another 5 minutes. At the end of the mixing, the temperature of the mix was about 210°C. The polymeric blend was removed from the mixer and was compression moulded into plates 1/8 inch thick that were used for measuring the Charpy resilience values and the elasticity modulus.

Example 13

The same procedure was followed as in Example 12, but using 35 g of Kostil AM instead of Kostil AP.

Example 14

The same procedure was followed as in Example 12, but using 35 grams of Kostil AF instead of Kostil AP. The Charpy resilience and the elasticity modulus of the products obtained in Examples 12 to 14 are given in Table 4 below.

TABLE 4

| Example | Charpy resilience (kg.cm/cm$^2$) | Elasticity modulus under bending (kg/cm$^2$) |
|---|---|---|
| 12 | 12.6 | 21,000 |
| 13 | 22.8 | 21,100 |
| 14 | 17.9 | 21,500 |

Example 15

91 Grams of Kostil AP, 39 g of Elaprim AR 153, and 0.4 g of anhydrous zinc chloride were mixed together in a cylinder mixer (cylinder mill) pre-heated to 170°C. After 20 minutes of mixing, the blend was discharged from the mixer and compression moulded into plates 1/8 inch thick. The Charpy resilience of the material tested was equal to 9.1 kg.cm/cm$^2$ while the elasticity modulus under bending was 17,500 kg/cm$^2$.

5

Example 16

The procedure was followed as in Example 1, but using instead of Elaprim AR 153 rubber, a copolymer consisting of 98.5% by weight of ethylacrylate, 0.5% by weight of acrylic acid and 1% by weight of glycidyl methacrylate. The Charpy resilience of the product was 16.8 kg.cm/cm², while the elasticity modulus under bending was 19,200 kg/cm².

**Claims**

1. A process for preparing a mix or blend of an acrylic rubber which comprises a copolymer of 95—99.5 mol per cent of ethylacrylate and/or butylacrylate with 5—0.5 mol per cent of acrylic and/or methacrylic acid, with a copolymer of 75—65 mol per cent styrene with 25—35 mol per cent of acrylonitrile, characterized by comprising mixing together the said acrylic rubber with the said styrene/acrylonitrile copolymer in an amount of acrylic rubber of from 5% to 50% by weight based on the weight of the acrylic rubber and styrene/acrylonitrile copolymer, at a temperature from the glass transition temperature of the styrene/acrylonitrile copolymer to 220°C, in the presence of from 0.05% to 2% by weight, based on the weight of the mixture of polymers, of a compound selected from zinc chloride, cadmium chloride, ferric chloride, aluminium chloride and boron trifluoride, preferably in the form of $BF_3 \cdot (C_2H_5)_2O$, and in the presence of an epoxy cross-linking agent used in an amount of from 0.5 to 5 mols based on 100 mols of acrylic rubber, or, in the case that it is chemically bound to the rubber, on 100 mols of the total of monomeric units consisting of ethyl and/or butyl acrylate and acrylic and/or methacrylic acid.

2. A process as claimed in Claim 1, characterized by the presence of zinc chloride in an amount of from 0.1% to 1% by weight based on the weight of the mixture of polymers.

**Patentansprüche**

1. Verfahren zur Herstellung einer Mischung aus einem Acrylkautschuk, der ein Copolymer aus 95 bis 99,5 Mol-% Ethylacrylat und/oder Butylacrylat mit 5 bis 0,5 Mol-% Acryl- und/oder Methacrylsäure umfaßt, und einem Copolymer aus 75 bis 65 Mol-% Styrol mit 25 bis 35 Mol-% Acrylnitril, gekennzeichnet durch das Merkmal des Mischens des Acrylkautschuks mit dem Styrol/Acrylnitril-Copolymer in einer Menge des Acrylkautschuks von 5 bis 50 Gew.-%, bezogen auf das Gewicht aus Acrylkautschuk und Styrol/Acrylnitril-Copolymer, bei einer Temperatur von der Glasübergangstemperatur des Styrol/Acrylnitril-Copolymers bis 220°C in Anwesenheit von 0,05 bis 2 Gew.-%, bezogen auf das Gewicht der Mischung der Polymeren, einer Verbindung, ausgewählt aus Zinkchlorid, Cadmiumchlorid, Eisen-III-chlorid, Aluminiumchlorid und Bortrifluorid, vorzugsweise in Form von $BF_3 \cdot (C_2H_5)_2O$, und in Anwesenheit eines Epoxy-Vernetzungsmittels, das in einer Menge von 0,5 bis 5 Mol, bezogen auf 100 Mol Acrylkautschuk, oder, falls es chemisch an den Kautschuk gebunden ist, auf 100 Mol der gesamten, aus Ethyl- und/oder Butylacrylat und Acryl- und/oder Methacrylsäure bestehenden monomeren Einheiten, verwendet wird.

2. Verfahren nach Anspruch 1, gekennzeichnet durch die Anwesenheit von Zinkchlorid in einer Menge von 0,1 bis 1 Gew.-%, bezogen auf das Gewicht der Mischung der Polymeren.

**Revendications**

1. Procédé de préparation d'un mélange de caoutchouc acrylique qui comprend un copolymère de 95 à 99,5 mole pour cent en poids d'acrylate d'éthyle et/ou d'acrylate de butyle avec de 5 à 0,5 moles pour cent d'acide acrylique et/ou méthacrylique et un copolymère de 75 à 65 moles pour cent de styrène et de 25 à 35 moles pour cent d'acrylonitrile, caractérisé en ce que l'on mélange ce caoutchouc acrylique avec ce copolymère styrène acrylonitrile, la quantité de caoutchouc acrylique étant de 5% à 50% en poids par rapport au poids du caoutchouc acrylique et du copolymère styrène/acrylonitrile, à une température comprise entre la température de transition vitreuse du copolymère styrène/acrylonitrile et 220°C, en présence de 0,05% à 2% en poids, par rapport au poids du mélange des polymères, d'un composé choisi parmi le chlorure de zinc, le chlorure de cadmium, le chlorure de fer, le chlorure d'aluminium et le trifluorure de bore pris de préférence sous la forme de $BF_3(C_2H_5)_2O$, et en présence d'un agent de réticulation à fonction époxy utilisé en quantité de 0,5 à 5 moles par rapport à 100 moles de caoutchouc acrylique, ou, dans le cas où il est chimiquement lié au caoutchouc, par rapport à 100 moles du total d'unités monomères constituées d'acrylate d'éthyle et/ou de butyle et d'acide acrylique et/ou méthacrylique.

2. Procédé selon la revendication 1, caractérisé en ce que le chlorure de zinc est présent en quantité de 0,1 à 1% en poids par rapport au poids du mélange des polymères.